# EUROPÄISCHE PATENTANMELDUNG

(11) **EP 0 729 921 A2**
(43) Veröffentlichungstag der Anmeldung: **04.09.1996**
(21) Anmeldenummer: 96102397.5
(22) Anmeldetag: 17.02.1996
(51) Int. Cl.: C03C 3/064, C03C 8/02, C03C 8/14

(54) **Selbsttrübende Emailfritten für die Emaillierung von Aluminium oder Aluminiumlegierungen**

(30) Priorität: 02.03.1995 DE 19507216
(71) Anmelder: BAYER AG, 51368 Leverkusen (DE); Email Brügge N.V., B-8000 Brügge (BE)
(72) Erfinder: Münstedt, Rainer, Dr., 47807 Krefeld (DE); Leveaux, Marc, Dr., 59110 La Madeleine (FR); Crevits, Nancy, 8380 Lissewege (BE); Podestà, Wolfgang, Dr., 8000 Brugge (BE); Dhaese, Antoine, 8380 Lissewege (BE)
(74) Vertreter: Steiling, Lothar, Dr.

(57) **Zusammenfassung**

Die vorliegende Erfindung betrifft selbsttrübende Emailfrittezusammensetzungen, die für die Emaillierung von Aluminium bzw. Aluminiumlegierungen eingesetzt werden können.

## Beschreibung

Die vorliegende Erfindung betrifft selbsttrübende Emailfrittezusammensetzungen, die für die Emaillierung von Aluminium bzw. Aluminiumlegierungen eingesetzt werden können.

Aus der Literatur sind viele Emailfrittezusammensetzungen bekannt, die für die Emaillierung von Gegenständen aus Aluminium eingesetzt werden können (z.B. US 2 467 114, DE 2 244 067, DE 2 119 777, US 2 925 351, CA 85: 36671p, CA 95: 174228g). Mit diesen bekannten Emailfritten können jedoch keine gut deckenden, selbsttrübenden und chemisch beständigen Emaillierungen erzeugt werden. Aus diesem Grunde hat man sich bisher damit geholfen, dem sogenannten Mühlenversatz zusätzlich beispielsweise Titandioxid als Trübungsmittel zuzusetzen, um so deckende, chemisch beständige Emaillierungen auf Aluminium zu erhalten. Dieser Mühlenzusatz (bis zu 20 Gew.-%) in Form von beispielsweise Titandioxid führt dazu, daß sich das Titandioxid in der Emaillierung fein verteilt und durch sein hohes Streuvermögen dazu führt, daß die Emaillierung die Metallunterlage abdeckt.

Im Gegensatz zu Emailfritten für die Emaillierung von Aluminium gibt es schon seit längerer Zeit selbsttrübende Titanemailfritten für Stahl, die jedoch auf Aluminium nicht appliziert werden können, da sie bei Tempraturen von 590°C bis 650°C kristallisieren.

Aufgabe der vorliegenden Erfindung war es, Emailfritten für Aluminium oder Aluminiumlegierungen zur Verfügung zu stellen, mit denen es gelingt, selbsttrübende, chemisch beständige Emaillierungen auf Aluminium herzustellen, ohne daß zusätzliche Mühlenzusätze in Form von Trübungsmitteln bei der Herstellung des Mühlenversatzes (Schlicker) erforderlich wären.

Diese Aufgabe konnte mit Emailfritten einer ganz speziellen Zusammensetzung gelöst werden.

Gegenstand der Erfindung sind selbsttrübende, chemisch beständige Emailfrittezusammensetzungen für die Emaillierung von Aluminium bzw. Aluminiumlegierungen mit einem Wärmeausdehnungskoeffizienten von 460 bis 475·10⁻⁷K⁻¹ und einer Glasübergangstemperatur von 410 bis 440°C, welche dadurch gekennzeichnet sind, daß sie im wesentlichen folgende Zusammensetzung aufweisen:
- 32 bis 37 Gew.-%: SiO₂
- 0 bis 4 Gew.-%: B₂O₃
- 0 bis 3 Gew.-%: Al₂O₃
- 4 bis 9 Gew.-%: Li₂O
- 10 bis 18,5 Gew.-%: Na₂O
- 9 bis 14 Gew.-%: K₂O
- 0 bis 2 Gew.-%: MgO
- 0 bis 2 Gew.-%: SrO
- 0 bis 4 Gew.-%: BaO
- 6 bis 11 Gew.-%: V₂O₅
- 0 bis 3 Gew.-%: P₂O₅
- 0 bis 5 Gew.-%: Sb₂O₃
- 14 bis 21 Gew.-%: TiO₂
- 0 bis 2 Gew.-%: ZnO
- 0 bis 2 Gew.-%: SnO₂
- 0 bis 1 Gew.-%: MoO₃
wobei das Verhältnis von [TiO₂ + Sb₂O₃ + SnO₂ + ZnO + Al₂O₃] zu [Li₂O + Na₂O + K₂O] 0,52 bis 0,82 beträgt.

Bevorzugt weisen die Emailfritten folgende Zusammensetzung auf:
- 32,5 bis 36,4 Gew.-%: SiO₂
- 0 bis 3,2 Gew.-%: B₂O₃
- 0,1 bis 2,4 Gew.-%: Al₂O₃
- 4 bis 8,5 Gew.-%: Li₂O
- 10 bis 18,5 Gew.-%: Na₂O
- 9 bis 14 Gew.-%: K₂O
- 0 bis 1 Gew.-%: MgO
- 0 bis 1 Gew.-%: SrO
- 0 bis 2,5 Gew.-%: BaO
- 7 bis 10,4 Gew.-%: V₂O₅
- 1,8 bis 2,9 Gew.-%: P₂O₅
- 0 bis 4,1 Gew.-%: Sb₂O₃
- 14,2 bis 20,4 Gew.-%: TiO₂
- 0 bis 1,8 Gew.-%: ZnO
- 0 bis 2 Gew.-%: SnO₂,
- 0 bis 1 Gew.-%: MoO₃,
wobei das Verhältnis von [TiO₂ + Sb₂O₃ + SnO₂ + ZnO + Al₂O₃] zu [Li₂O + Na₂O + K₂O] 0,53 bis 0,82 beträgt.

Ganz besonders bevorzugt weisen die Emailfritten folgende Zusammensetzung auf:
- 32,5 bis 36,4 Gew.-%: SiO₂
- 0 bis 2,2 Gew.-%: B₂O₃
- 0,1 bis 0,4 Gew.-%: Al₂O₃
- 5,5 bis 7,5 Gew.-%: Li₂O
- 12 bis 17,5 Gew.-%: Na₂O
- 10 bis 13 Gew.-%: K₂O
- 0 bis 2,5 Gew.-%: BaO
- 7 bis 10,4 Gew.-%: V₂O₅
- 1,8 bis 2,3 Gew.-%: P₂O₅
- 0 bis 4,1 Gew.-%: Sb₂O₃
- 16,3 bis 20,4 Gew.-%: TiO₂
- 0 bis 0,9 Gew.-%: ZnO
- 0 bis 1,9 Gew.-%: SnO₂
- 0 bis 0,5 Gew.-%: MoO₃
wobei das Verhältnis von [TiO₂ + SnO₂ + Sb₂O₃ + ZnO + Al₂O₃] zu [Li₂O + Na₂O + K₂O] 0,56 bis 0,82 beträgt.

Mit den erfindungsgemäßen Emailfrittezusammensetzungen erhält man nach der Emaillierung auf Aluminium eine gut deckende selbsttrübende, weiße, chemisch beständige Emailschicht. Diese Emaildeckschicht kann erhalten werden, ohne daß zusätzlich Trübungsmittel im Mühlenversatz verwendet werden müssen.

Mit der speziellen Emailfrittenzusammensetzung kann bereits bei niedrigen Temperaturen (520 bis 570°C) eine Rekristallisation des in der Fritte vorhandenen TiO₂ erreicht werden, so daß eine weißdeckende Emailschicht während der Emaillierung bei Einbrenntemperaturen von 520 bis 570°C erzeugt werden kann.

Durch die Verwendung der erfindungsgemäßen Emailfrittezusammensetzungen ist es nicht mehr notwendig, dem Mühlenversatz zusätzlich Trübungsmittel zuzusetzen. Dadurch wird der Mühlenversatz besser handhabbar und nicht mehr so instabil wie früher.

Die erfindungsgemäßen Emailfritten können beispielsweise beim Naßauftrag auf Aluminium in Form des sogenannten Mühlenversatzes gemeinsam mit weiteren Mühlenzusätzen auf das Aluminiumsubstrat aufgebracht werden. Bevorzugt werden 100 Gew.-Teile der erfindungsgemäßen Emailfritte, 2 bis 10 Gew.-Teile Hilfsmittel, 0 bis 15 Gew.-Teile zusätzlicher Trübungsmittel und 0 bis 15 Gew.-Teile Pigmente und 50 bis 65 Gew.-Teile Wasser im Mühlenversatz eingesetzt.

Nach Aufbringen des Mühlenversatzes auf das Aluminiumsubstrat wird dieses bei Temperaturen zwischen 520 und 570°C gebrannt. Man erhält eine selbsttrübende Emailschicht, die ein hohes Deckvermögen und eine hohe chemische Beständigkeit aufweist.

Die mit den erfindungsgemäßen Emailfritten hergestellten Emaillierungen weisen eine hohe Säurebeständigkeit sowie ein hohes Deckvermögen auf. Desweiteren neigen sie selbst nach vielen Tagen bei sehr hohen Temperaturen nicht zu Verfärbungen (insbesondere nicht zu Vergrauung oder Vergilbung). Auch können mit den erfindungsgemäßen Emailfritten dünnere Emailschichten hergestellt werden, ohne daß dabei die Säurebeständigkeit negativ beeinflußt wird oder die Deckkraft nicht mehr ausreichend ist. Die dünneren Emailschichten haben den großen Vorteil, daß Rißbildung oder Deformationen oder sonstige Oberflächendefekte nach Emaillierung und Abkühlung nicht oder weniger auftreten.

Die erfindungsgemäßen Emailfritten können nach den bekannten Verfahren hergestellt werden. Die Ausgangsstoffe für die entsprechenden Oxidkomponenten in der Emailfrittezusammensetzung werden gemischt, danach geschmolzen und dann in Wasser abgeschreckt. Als Ausgangsverbindungen werden die Oxide der Emailfrittekomponenten oder andere Verbindungen, die während des Schmelzprozesses in die Oxide übergehen, eingesetzt.

Beim Naßauftrag auf ein Aluminiumsubstrat werden die erfindungsgemäßen Emailfritten im sogenannten Mühlenversatz mit weiteren Komponenten abgemischt und anschließend auf das Substrat gesprüht bzw. das Substrat wird in den Mühlenversatz eingetaucht. Als Mühlenzusätze werden normalerweise Hilfsmittel (Borsäure, Kaliumhydroxid, Natriumsilikat, Silikagel und/oder Carboxymethylzellulose), gegebenenfalls zusätzliche Trübungsmittel (TiO₂, SnO₂, Sb₂O₃, ZnO, ZrO₂, ZrSiO₄) und gegebenenfalls Pigmente verwendet. Nach eventuell durchgeführter Trocknung wird normalerweise bei 520-570°C 2 bis 8 Minuten gebrannt.

Die Erfindung soll anhand der nachfolgenden Beispiele näher erläutert werden.

### Beispiele

### Herstellung der Emailfritten:

Die verschiedenen Emailfritten wurden durch Abmischung und Schmelzen der entsprechenden Ausgangsstoffe in einem elektrischen Schmelzofen hergestellt. Nach dem Schmelzvorgang wurde der jeweilige Glasfluß in Wasser abgeschreckt. Der Schmelzvorgang wurde jeweils bei 1100 bis 1150°C während etwa 15 bis 30 Minuten durchgeführt. Die Zusammensetzungen der erschmolzenen Fritten sind den Tabellen 1 und 2 zu entnehmen.

### Herstellung der Mühlenversätze:

100 Gew.-Teile der oben hergestellten Emailfritten werden jeweils mit 4 Gew.-Teilen Borsäure, 1 Gew.-Teil Natriumsilikat und 50 Gew.-Teilen Wasser abgemischt. Die Mischung wird solange gemahlen, bis die Partikel eine Größe erreichen, so daß nicht mehr als 2 % auf einem Sieb der Maschenweite 38 µm verbleiben. Diese so hergestellten Mischungen werden zur Emaillierung der Aluminiumsubstrate eingesetzt. In weiteren Versuchen wurden den Mühlenversätzen zusätzlich bis zu 15 Gew.-Teile Trübungsmittel zugesetzt.

### Herstellung der Emaillierung:

Die oben hergestellten Mühlenversätze werden auf Aluminiumblechen in einer Menge appliziert, so daß nach der Emaillierung eine Schicht mit einer Dicke zwischen 50 und 100 Mikron, bevorzugt zwischen 60 und 80 Mikron vorliegt. Nach dem Auftrag der Mühlenversätze auf die Aluminiumbleche werden diese getrocknet und anschließend bei Temperaturen zwischen 520 und 570°C gebrannt. Der Brennvorgang dauert 2 bis 8 Minuten.

Die erfindungsgemäßen Emailfritten 1 bis 27 (Tabelle 1) liefern Emailschichten mit guter chemischer Beständigkeit und Deckvermögen. Der Selbsttrübungseffekt dieser Emailschichten ist gut und wird noch durch die zusätzlichen Trübungsmittel im Mühlenversatz verstärkt. Eine Dicke der Emailschicht von 50 bis 60 µm ist ausreichend. Die Fritten gemäß dem Stand der Technik A bis P (Tabelle 2) liefern Emailschichten ohne Deckkraft. Nur beim Einsatz von 15 Gew.-Teilen und mehr Trübungsmittel im Mühlenversatz und einer Dicke der Emailschicht von 80 µm und mehr wird eine Emaillierung mit guter Deckkraft erhalten.

Werden die erfindungsgemäßen Fritten (z.B.: 1, 5, 11, 21 und 24) entsprechend den obigen Vorschriften auf Aluminium aufgebracht, allerdings bei Temperaturen zwischen 480°C und 500°C gebrannt, so zeigen die Emaillierungen keine oder nur schwache Selbsttrübung.

Die erfindungsgemäßen Fritten 1 bis 27 werden entsprechend den obigen Vorschriften auf Aluminium aufgebracht und gebrannt. Die resultierenden emaillierten Aluminiumbleche werden für 20 Tage bei 360°C in einem Ofen aufbewahrt. Nach Abkühlung wird die Verfärbung gemessen. Die mit den erfindungsgemäßen Fritten 1 bis 27 hergestellten Emaillierungen zeigen keine Verfärbung, während die mit den nicht erfindungsgemäßen Fritten A bis P hergestellten Emaillierungen Verfärbungen aufweisen.

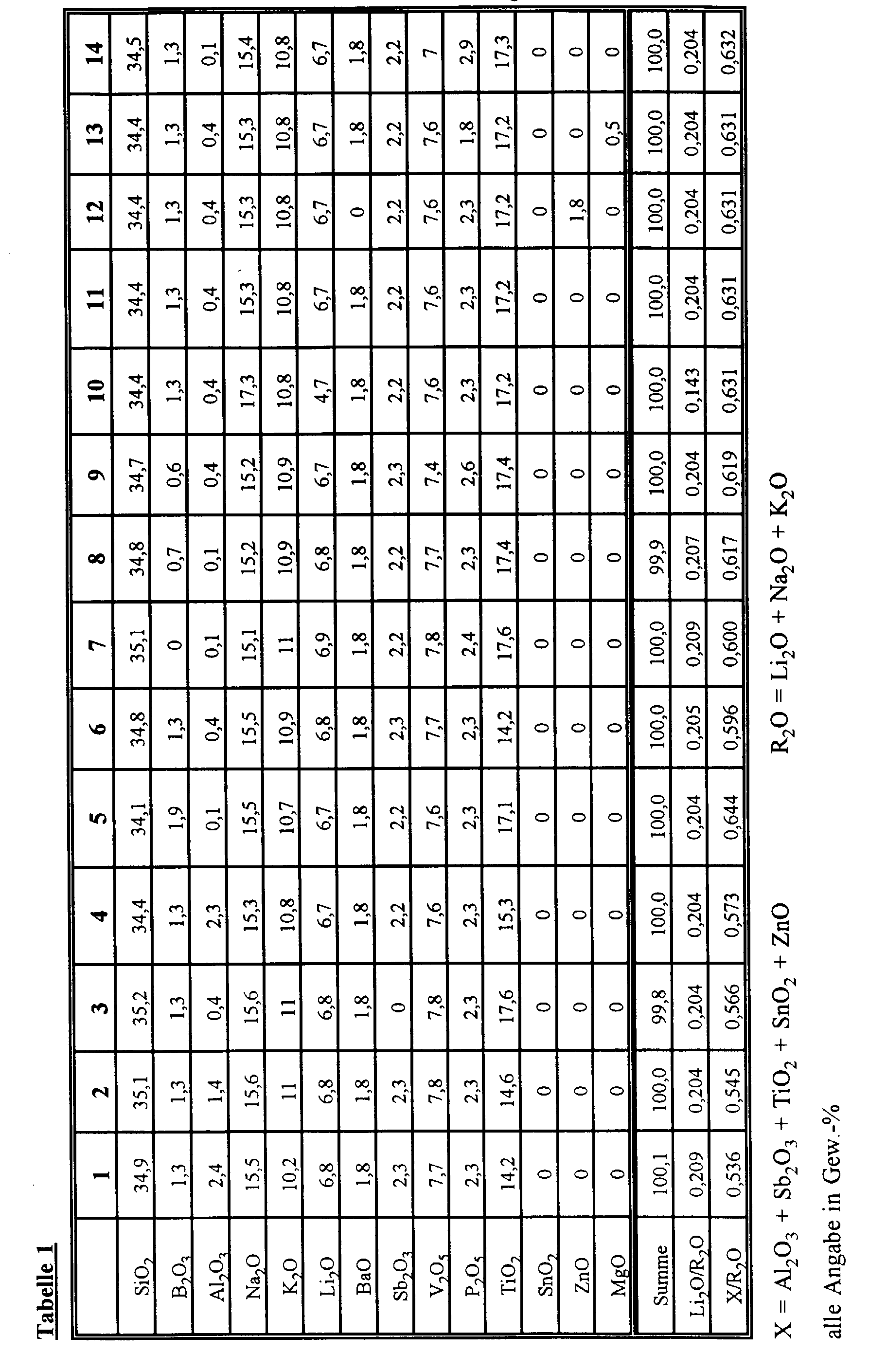

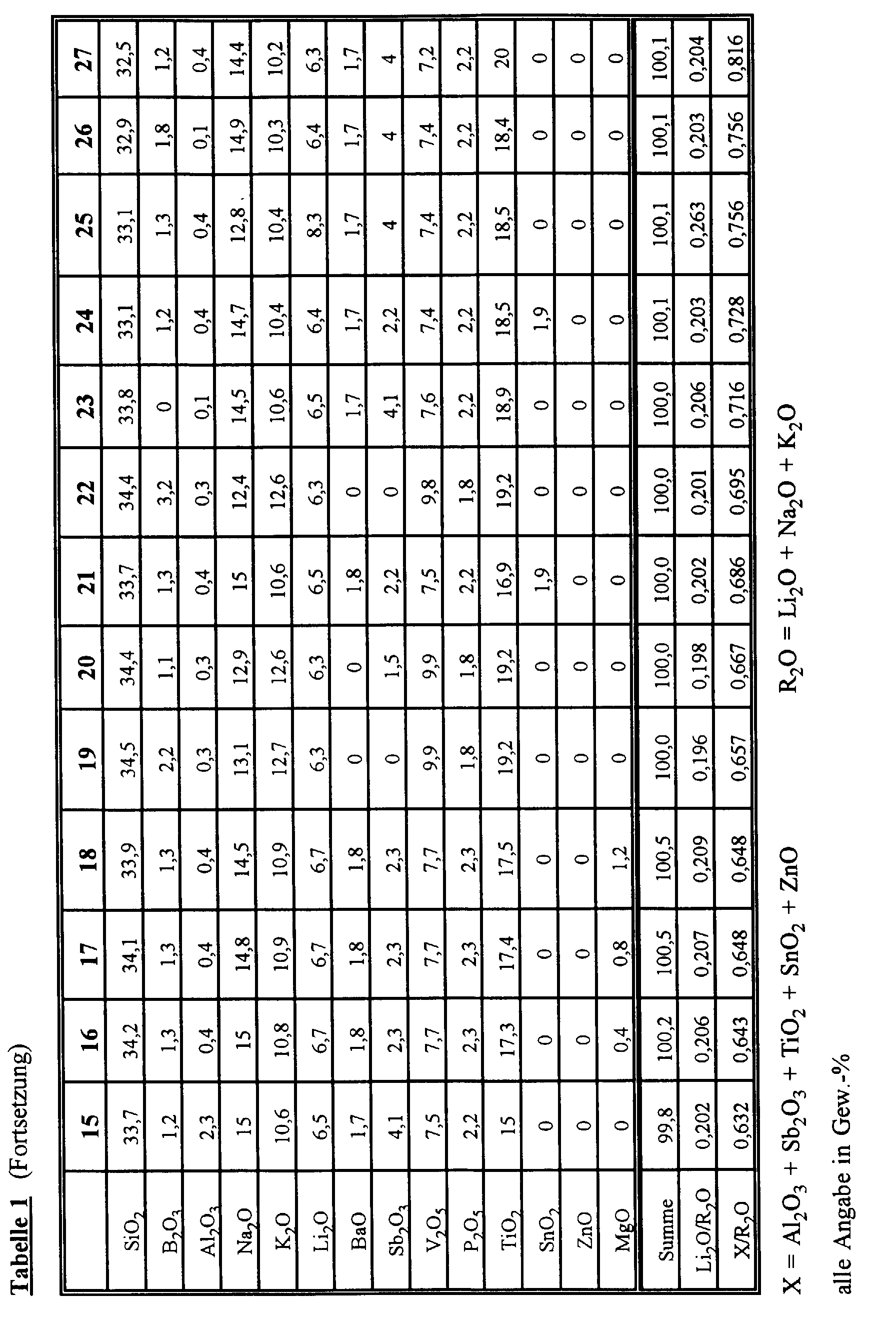

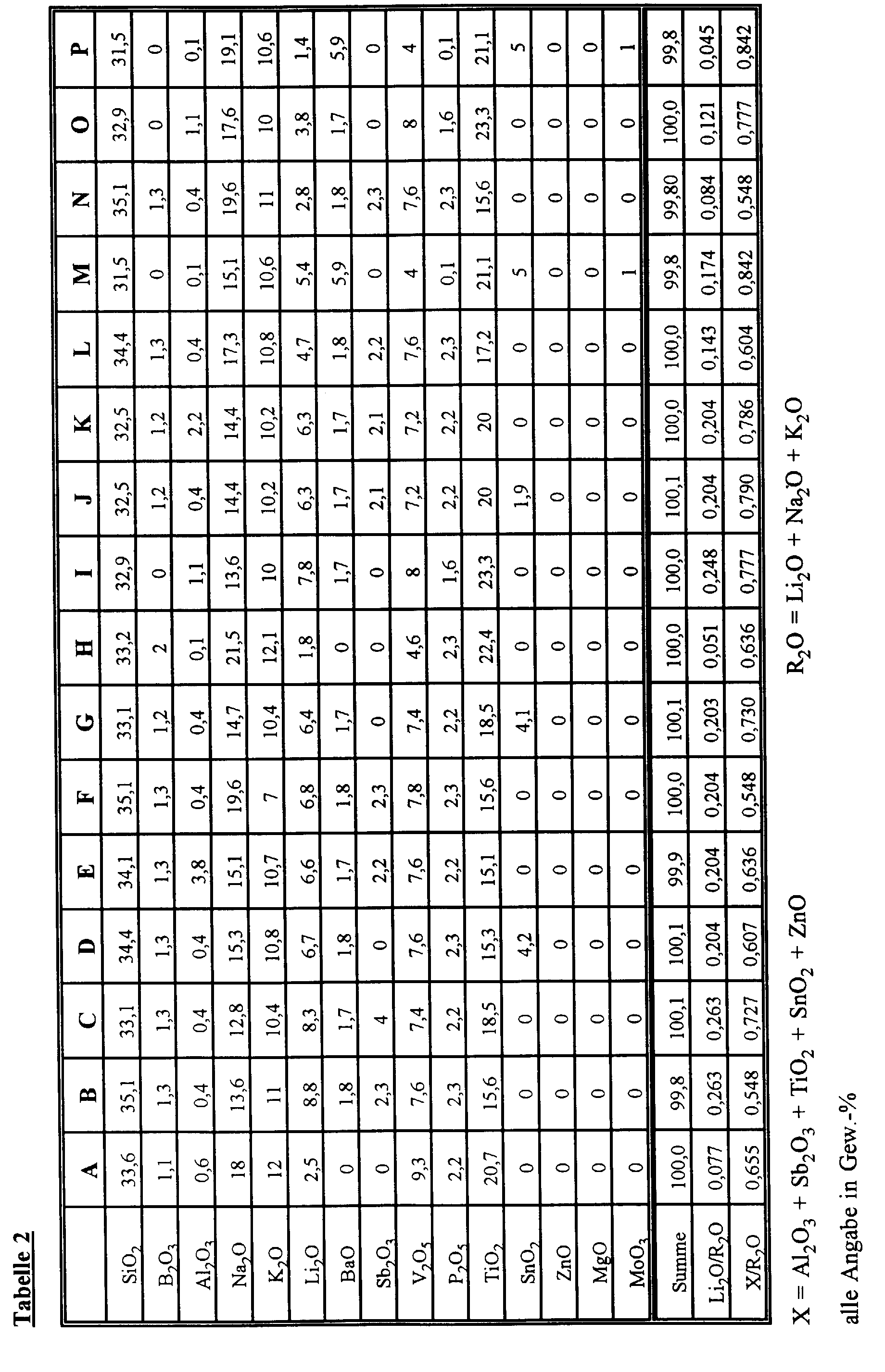

## Patentansprüche

1. Selbsttrübende und chemisch beständige Emailfrittezusammensetzungen für die Emaillierung auf Aluminium oder Aluminiumlegierungen mit einem Wärmeausdehnungskoeffizienten von 460 bis 475·10⁻⁷K⁻¹ und einer Glasübergangstemperatur von 410 bis 440°C, welche dadurch gekennzeichnet sind, daß die Fritten im wesentlichen folgende Zusammensetzung aufweisen:
32 bis 37 Gew.-% SiO₂
0 bis 4 Gew.-% B₂O₃
0 bis 3 Gew.-% Al₂O₃
4 bis 9 Gew.-% Li₂O
10 bis 18,5 Gew.-% Na₂O
9 bis 14 Gew.-% K₂O
0 bis 2 Gew.-% MgO
0 bis 2 Gew.-% SrO
0 bis 4 Gew.-% BaO
6 bis 11 Gew.-% V₂O₅
0 bis 3 Gew.-% P₂O₅
0 bis 5 Gew.-% Sb₂O₃
14 bis 21 Gew.-% TiO₂
0 bis 2 Gew.-% ZnO
0 bis 2 Gew.-% SnO₂
0 bis 1 Gew.-% MoO₃
wobei das Verhältnis von [TiO₂ + Sb₂O₃ + SnO₂ + ZnO + Al₂O₃] zu [Li₂O + Na₂O + K₂O] 0,52 bis 0,82 beträgt.

2. Emailfrittezusammensetzung gemäß Anspruch 1, dadurch gekennzeichnet, daß die Fritten im wesentlichen folgende Zusammensetzung aufweisen:
32,5 bis 36,4 Gew.-% SiO₂
0 bis 3,2 Gew.-% B₂O₃
0,1 bis 2,4 Gew.-% Al₂O₃
4 bis 8,5 Gew.-% Li₂O
10 bis 18,5 Gew.-% Na₂O
9 bis 14 Gew.-% K₂O
0 bis 1 Gew.-% MgO
0 bis 1 Gew.-% SrO
0 bis 2,5 Gew.-% BaO
7 bis 10,4 Gew.-% V₂O₅
1,8 bis 2,9 Gew.-% P₂O₅
0 bis 4,1 Gew.-% Sb₂O₃
14,2 bis 20,4 Gew.-% TiO₂
0 bis 1,8 Gew.-% ZnO
0 bis 2 Gew.-% SnO₂,
0 bis 1 Gew.-% MoO₃,
wobei das Verhältnis von [TiO₂ + Sb₂O₃ + SnO₂ + ZnO + Al₂O₃] zu [Li₂O + Na₂O + K₂O] 0,53 bis 0,82 beträgt.

3. Emailfrittezusammensetzungen gemäß Anspruch 1, dadurch gekennzeichnet, daß die Fritten im wesentlichen folgende Zusammensetzung aufweisen:
32,5 bis 36,4 Gew.-% SiO₂
0 bis 2,2 Gew.-% B₂O₃
0,1 bis 0,4 Gew.-% Al₂O₃
5,5 bis 7,5 Gew.-% Li₂O
12 bis 17,5 Gew.-% Na₂O
10 bis 13 Gew.-% K₂O
0 bis 2,5 Gew.-% BaO
7 bis 10,4 Gew.-% V₂O₅
1,8 bis 2,3 Gew.-% P₂O₅
0 bis 4,1 Gew.-% Sb₂O₃
16,3 bis 20,4 Gew.-% TiO₂
0 bis 0,9 Gew.-% ZnO
0 bis 1,9 Gew.-% SnO₂
0 bis 0,5 Gew.-% MoO₃
wobei das Verhältnis von [TiO₂ + SnO₂ + Sb₂O₃ + ZnO + Al₂O₃] zu [Li₂O + Na₂O + K₂O] 0,56 bis 0,82 beträgt.

4. Schlicker für die Emaillierung auf Aluminium oder Aluminiumlegierungen, dadurch gekennzeichnet, daß der Schlicker folgende Zusammensetzung aufweist:
100 Gew.-Teile Emailfritte gemäß Anspruch 1-3
0 bis 15 Gew.-Teile Trübungsmittel
2 bis 10 Gew.-Teile Hilfsmittel
0 bis 15 Gew.-Teile Pigmente
50 bis 65 Gew.-Teile Wasser.
